**Europäisches Patentamt**

**European Patent Office**

**Office européen des brevets**

(11) Veröffentlichungsnummer: **0 100 445**
**A2**

(12) # EUROPÄISCHE PATENTANMELDUNG

(21) Anmeldenummer: **83106415.9**

(22) Anmeldetag: **01.07.83**

(51) Int. Cl.$^3$: **C 08 F 8/20**

(30) Priorität: **09.07.82 DE 3225711**

(43) Veröffentlichungstag der Anmeldung:
**15.02.84 Patentblatt 84/7**

(84) Benannte Vertragsstaaten:
**BE DE FR GB**

(71) Anmelder: **BASF Aktiengesellschaft**
**Carl-Bosch-Strasse 38**
**D-6700 Ludwigshafen(DE)**

(72) Erfinder: **Bronstert, Klaus, Dr.**
**Gartenstrasse 26**
**D-6719 Carlsberg(DE)**

(54) Verfahren zur Chlorierung von Vinylchlorid-Polymerisaten.

(57) Die Erfindung betrifft ein Verfahren zur Chlorierung von pulverförmigen Polyvinylchloridpolymerisaten bei erhöhter Temperatur in der Gasphase in mindestens einer Reaktionszone in Gegenwart von Chlor und Sauerstoff. Dabei wendet man 0,01 bis 0,5 Vol.% Sauerstoff, bezogen auf Chlor, an und führt die Chlorierung ohne zu Belichten durch.

Die nach dem erfindungsgemäßen Verfahren erhaltenen Polymerisate werden zur Herstellung von Formteilen verwendet.

EP 0 100 445 A2

BASF Aktiengesellschaft                    O.Z. 0050/36010

Verfahren zur Chlorierung von Vinylchlorid-Polymerisaten

Die Erfindung betrifft ein Verfahren zur Chlorierung von pulverförmigen Polymerisaten des Vinylchlorids in der Gasphase in Gegenwart von Chlor und Sauerstoff.

Zum Stand der Technik nennen wir:

(1)  DE-OS 16 45 097
(2)  DE-OS 17 20 293
(3)  JA-OS 47/27 290 und
(4)  FR-PS 15 66 538

Aus (1) ist die Nachlorierung von PVC in der Gasphase bekannt. Die Mitverwendung von Sauerstoff ist in (2) am Beispiel von Polyethylen und in (3) am Beispiel von PVC beschrieben.

Es ist bekannt, daß man durch Chlorierung von PVC Werkstoffe erhält, die im Vergleich zu dem Ausgangspolymeren verbesserte Eigenschaften aufweisen. Durch Anheben des Chlorgehaltes im PVC von 56 auf 65 bis 67 % wird z.B. der Erweichungspunkt (E.P.) von 81 bis 83°C auf 125 bis 135°C erhöht, was das Material für Anwendungen geeignet macht, für die eine erhöhte Wärmeformbeständigkeit benötigt wird.

Die Chlorierung von PVC wird entweder in Suspension (in Salzsäure), vgl. (4), oder in der Gasphase durchgeführt. Die Temperatur muß so hoch gewählt werden, daß eine wirtschaftliche Reaktionsgeschwindigkeit erreicht wird, aber so tief, daß kein Durchgehen der Reaktion erfolgt, welches mit Zusammensintern und Zersetzung unter HCl-Abspaltung und Verkohlung verbunden ist. Die Temperatur wird dazu innerhalb eines engen Bereiches gehalten und dem mit dem Umsatz an-Vo/P steigenden EP nachgeführt. Bei der Chlorierung in Suspension erleichtert das Suspensionsmittel die Reaktionsführung, da dies Temperaturspitzen dämpft und die Abführung der Reaktionswärme über die Wandungen erleichtert. Wegen der starken Korrosion heißer wäßriger Salzsäure und der aufwendigen Entfernung der im Reaktionsprodukt enthaltenen Salzsäure wurde bereits vorgeschlagen, die Chlorierung in der Gasphase durchzuführen, z.B. in der Wirbelschicht, in der jedoch eine genaue Temperaturführung schwierig ist. Die Reaktion setzt plötzlich und unregelmäßig ein, weshalb bei niedrigen Chlorkonzentrationen, z.B. Verdünnung mit Stickstoff und unter Belichtung gearbeitet wird. Auch wurde schon vorgeschlagen, zur Verbesserung des Wärmeübergangs und zur Verhinderung von Zersetzungen Stickstoff oder andere Inertgase zu verwenden.

Es wurde nun gefunden, daß der Beginn und der Ablauf der Chlorierung von PVC in der Gasphase gleichmäßiger wird und bei niedriger Temperatur einsetzt, wenn man in Gegenwart geringer Mengen von Sauerstoff arbeitet. Insbesondere kann man auf Belichtung und Zusatz von Inertgasen verzichten.

Somit können durch ein Verfahren gemäß Patentanspruch 1 die Nachteile der bekannten Verfahren behoben werden.

Nachstehend wird die Durchführung des erfindungsgemäßen Verfahrens beschrieben:

Das erfindungsgemäße Verfahren kann kontinuierlich, bevorzugt jedoch diskontinuierlich, in der Gasphase, d.h. in Abwesenheit von Lösungsmitteln oder Suspensionsmitteln, durchgeführt werden. Ein solches Verfahren ist z.B. in (1) für eine als Wirbelschicht ausgestattete Reaktionszone beschrieben. Als weitere Ausgestaltung der Reaktionszone ist ein Drehrohr zu nennen; eine Wirbelschicht wird jedoch bevorzugt angewendet.

Wesentlich ist, daß beim erfindungsgemäßen Verfahren auf eine künstliche Belichtung verzichtet werden kann und außerdem die Mitverwendung von Inertgasen, wie Stickstoff etc. nicht erforderlich ist, wenn man 0,01 bis 0,5 Vol% Sauerstoff, bezogen auf Chlor anwendet.

Schon eine Beimischung von 0,01 % Sauerstoff zum Chlor zeigt einen Effekt; besonders vorteilhaft sind Mengen von 0,05 bis 0,25 % Sauerstoff, weil ein gleichmäßiges und gut über die Temperatur steuerbares Einsetzen der Reaktion erreicht wird und im weiteren Verlauf die Chlorierung bei tieferem Temperaturniveau abläuft. Die Gefahr von Agglomerationen und Zersetzungen des Reaktionsgutes wird verringert und dessen Verarbeitungsstabilität, Farbe und mechanische Eigenschaften werden verbessert. Über 0,2 % Sauerstoffgehalt ergeben jedoch ein Abfall des K-Wertes sowie eine progessive Verfärbung der Reaktionsprodukte, weshalb eine über 0,5 % hinausgehende Zumischung nicht zweckmäßig ist.

Das erfindungsgemäße Verfahren wird bei Temperaturen von 70-130°C, insbesondere bei Temperaturen von 75-126°C durchgeführt.

Die Erfindung wird nachstehend anhand von Beispielen und Vergleichsversuchen näher erläutert:

In einer gläsernen mit Kühlmantel versehenen Wirbelschichtapparatur mit einem Durchmesser von 15 cm und einer Höhe von 50 cm mit einem konischen Bodenteil, wurde jeweils 2,5 kg eines PVC-Typs von K-Wert 58 gefüllt, das in Abwesenheit von Suspensionshilfsmitteln polymerisiert worden war. Für die Aufwirbelung des Pulvergutes wurden mit einem mit Teflon ausgekleideten Membrankompressor ca. 20 m$^3$ Gas/h im Kreis gepumpt, wobei ein Teil laufend durch Frischgas ersetzt und eine entsprechende Menge Abgas abgezogen wurde. Vor Beginn der Chlorierung wurde die Luft in der Apparatur durch Stickstoff verdrängt, indem 15 Minuten lang ein Stickstoffstrom von 200 l/h eingeleitet wurde. Sodann wurde die Gaszufuhr auf reines Chlor umgestellt, das zunächst mit einer Menge von 100 l/h im späteren Stadium der Reaktion mit 200 l/h eingeleitet wurde, und die Temperatur erhöht. Proportional zur Chlormenge und bezogen auf diese wurde ferner Sauerstoff in der in der Tabelle angegebenen Menge zudosiert. Die Reaktionsgeschwindigkeit wurde über die Temperatur so eingestellt, daß im Abgas eine Chlorkonzentration von 25 bis 35 % gemessen wurde. Nach Ende des Versuchs bzw. Erreichen des angestrebten Chlorgehalts von 65 bis 66 %, wurde mit N$_2$ so lange begast, bis Cl$_2$ und HCl aus dem Material und dem Reaktor verdrängt waren.

In der Tabelle sind zusätzlich die Temperaturen, bei denen die Chlorierung einsetzt, sowie die Endtemperaturen, aufgeführt.

Zur Messung der Verarbeitbarkeit wurden je 100 g der Reaktionsprodukte mit 3 g basischem Bleisulfat, 1 g Ca-stearat und 1 g Pb-stearat 5 Minuten auf einem auf 190°C beheizten 2-Walzen-Nickel-Kalander homogenisiert, Walzfelle abgezogen und deren Eigenschaften und Farbe bestimmt. Außerdem wurden die K-Werte gemessen.

Aus einem Vergleich der Werte in der Tabelle ergibt sich, daß bei Chlorierung von PVC ohne Gegenwart von Sauerstoff (Vergleichsversuch) die Chloraufnahme sehr träge und bei erhöhten Temperaturen stattfindet. Es gelang nicht, den gewünschten Endgehalt von 65 bis 66 % Chlor zu erreichen. In

0100445

Gegenwart von geringen Mengen (0,1 bis 0,2 %) Sauerstoff erfolgt dagegen eine zügige Chlorierung. Die Produkte haben gute mechanische Eigenschaften und eine helle Farbe. Bei Chlorierung in Gegenwart höherer Sauerstoffgehalte wird jedoch eine zunehmende Verfärbung der Chlorierungsprodukte und eine Abnahme von K-Wert und mechanischen Eigenschaften beobachtet. (Die Versuche 5, 6 und 7 sind als verschlechterte Ausführungsform der Erfindung zu betrachten.)

Tabelle

| Bei-spiele | % $O_2$ | Temperatur [°C] bei Beginn der Chlorauf-nahme | Temperatur [°C] bei Versuchs-ende | Chlorierungs-dauer (Stunden) | Chlor-gehalt im End-produkt |
|---|---|---|---|---|---|
| 1 | 0,12 | ~82 | 125 | 4 | 66,4 |
| 2 | 0,17 | 79 | 125 | 4 | 66,6 |
| 3 | 0,2 | 78 | 124 | 4 | 64,7 |
| 4 | 0,25 | 78 | 123 | 3,75 | 65,1 |
| 5 | 0,5 | 78 | 121 | 3,75 | 65 |
| 6 | 0,8 | 78 | 122 | 3,75 | 65 |
| 7 | 1,6 | 78 | 121 | 3,75 | 65 |
| Vgl.-Vers. | 0 | 86 | 118 | 5 | 60 |

Tabelle (Forts.)

| Bei-spiele | Farbe | Bemerkungen zum Versuchs-ablauf | K-Wert | Eigenschaften der Walzfelle | |
|---|---|---|---|---|---|
| | | | | Farbe | Festigkeit |
| 1 | schnee-weiß | zügige gleich-mäßige Chlor-aufnahme | 52,4 | beige | zäh-elastisch |
| 2 | " | " | 53,9 | hellbraun | " |
| 3 | " | " | 54,2 | " | " |
| 4 | weiß | " | 50,2 | braun | elastisch |
| 5 | eierscha-lenfarbig | " | 49,5 | dunkelbraun | spröde |
| 6 | leichter Gelbstich | " | <45 | schwarz-braun | sehr spröde |
| 7 | hellgelb | " | <45 | schwarz | " |
| Vgl.-Vers. | weiß | sehr langsame Chloraufnahme, Bildung von Agglomeraten, Versuch mußte abgebrochen werden | <45 | - | - |

Patentansprüche

1. Verfahren zur Chlorierung von pulverförmigen Polyvinylchloridpolymerisaten bei Temperaturen von 70-130°C in der Gasphase in mindestens einer Reaktionszone in Gegenwart von Chlor und Sauerstoff, dadurch gekennzeichnet, daß man 0,01 bis 0,5 Vol.% Sauerstoff, bezogen auf Chlor, anwendet und die Chlorierung ohne zu Belichten durchführt.

2. Verwendung der Polymerisate gemäß Anspruch 1 zur Herstellung von Formteilen.

3. Formteile, enthaltend Polymerisate gemäß Anspruch 1.